# FASCICULE DE BREVET EUROPEEN

(11) **EP 1 160 497 B1**
(45) Date de publication et mention de la délivrance du brevet: **25.02.2004**
(21) Numéro de dépôt: 00870119.5
(22) Date de dépôt: 31.05.2000
(51) Int. Cl.: F16L 23/032

(54) **Dispositif permettant l'assemblage de pièces de révolution**
Anordnung zur Verbindung zweier rotationssymmetrischer Körper
Device to connect two rotationally symmetrical components

(43) Date de publication de la demande: 05.12.2001
(73) Titulaire: Techspace Aero S.A., 4041 Herstal (BE)
(72) Inventeur: Bos, Mathieu, 3520 Zonhoven (BE); Ryhon, Sébastien, 4140 Sprimont (BE); Leman, Frédéric, 91000 Evry (FR); Vieillefond, Guy, 91000 Evry (FR)
(74) Mandataire: Van Malderen, Joelle

(56) Documents cités:
- EP-A- 0 940 179
- DE-A- 2 527 051
- US-A- 1 965 357

## Description

### Objet de l'invention

La présente invention se rapporte à un nouveau type de bride destinée à solidariser deux pièces de révolution par boulonnage et qui est donc apposée sur une des deux pièces.

### Etat de la technique

Pour l'assemblage par boulonnage de pièces de révolution, le plus souvent, on utilise des brides qui sont directement réalisées par tournage dans la masse à l'intérieur ou à l'extérieur d'au moins une des pièces.

Par "boulonnage", on entend la solidarisation par serrage à l'aide de boulons ou vis, goujons ou tiges filetées qui sont éventuellement associés à des écrous.

Le type de bride le plus couramment utilisé pour l'assemblage des pièces de révolution, par exemple les cônes boulonnés utilisés comme supports de palier, est une bride extérieure avec ou sans renforts.

On définit le facteur de bride comme un facteur qui tient compte du fait que l'axe de l'effort passant par le voile du support et l'axe de la vis sont désalignés, ce qui entraîne la création d'un moment de flexion. La valeur du facteur de bride varie en théorie entre 1 (alignement des efforts) et l'infini (désalignement complet).

Le facteur de bride est d'autant plus grand que le désalignement est grand. En effet, ce désalignement génère un bras de levier (moment de flexion) qui introduit une augmentation de l'effort passant dans les vis lors d'un décollement des brides. Un facteur de bride important (>>1) est donc néfaste pour la tenue mécanique d'un assemblage boulonné.

La présence de renforts au niveau de la bride a pour but de réduire le facteur de bride. Ces renforts permettent en effet de diminuer le bras de levier susmentionné.

Les brides intérieures sont également connues, voir par exemple document US 1 965 357, comme permettant de diminuer le facteur de bride, mais néanmoins, généralement, elles ne présentent pas de renfort car leur réalisation est très délicate.

### Buts de l'invention

La présente invention a pour but de proposer un dispositif permettant l'assemblage par boulonnage de deux pièces de révolution, ne présentant pas les inconvénients de l'état de la technique.

En particulier, la présente invention a pour but de proposer une solution présentant un facteur de bride proche de 1.

La présente invention vise également à proposer un procédé de réalisation d'une bride intérieure disposée sur une pièce de structure de révolution qui est facile à mettre en oeuvre.

### Principaux éléments caractéristiques de l'invention

La présente invention se rapporte à une pièce de structure de révolution munie à l'une de ses extrémités d'une bride circulaire intérieure destinée à l'assemblage par boulonnage de ladite pièce de structure de révolution avec une seconde pièce de structure de révolution, ladite bride comportant des logements destinés à recevoir des éléments de fixation tels que 'boulons, goujons ou tiges filetées, lesdits logements étant disposés sur la circonférence de ladite bride à intervalles réguliers, caractérisée en ce que lesdits logements présentent en section longitudinale la forme d'un T et sont constitués d'une première partie essentiellement cylindrique ouverte longitudinalement sur la face intérieure de la pièce de structure de révolution et transversalement sur la face de contact de la bride dans l'assemblage, surmontée d'une deuxième partie essentiellement semi-cylindrique également ouverte longitudinalement sur la face intérieure de ladite pièce de structure, la seconde partie présentant en section transversale essentiellement la forme d'un D, le diamètre de la première partie cylindrique étant inférieur au diamètre de la partie semi-cylindrique pour chacun des logements.

Avantageusement, la pièce de structure de révolution est en aluminium.

L'invention se rapporte également à un procédé de fabrication d'une bride circulaire intérieure disposée sur une pièce de structure de révolution, de préférence conique ou cylindrique, et qui présente des logements destinés à recevoir des éléments de fixation tels que boulons, goujons ou tiges filetées, caractérisé en ce que lesdits logements sont usinés à intervalles réguliers sur la circonférence de ladite bride à l'aide notamment d'une fraise ayant essentiellement la forme d'un T et de manière telle que l'axe de ladite fraise se déplace, durant l'usinage, dans une direction essentiellement perpendiculaire à l'axe de révolution de ladite pièce, de préférence radialement, tout en lui restant parallèle.

### Brève description des dessins

Les figures 1a et 1b représentent chacune une vue en perspective d'une pièce de révolution munie d'une bride extérieure avec renforts, selon l'état de la technique.

La figure 2 représente une vue en perspective d'une pièce de révolution munie d'une bride intérieure avec renforts, selon l'état de la technique.

La figure 3 représente une vue en perspective d'une pièce de révolution munie d'une bride intérieure avec renforts, selon l'invention.

La figure 4 représente une vue en coupe AA d'un assemblage de deux pièces de révolution dont l'une est munie d'une bride selon l'invention, comme représentée à la figure 3.

### Description d'une forme d'exécution de l'état de la technique

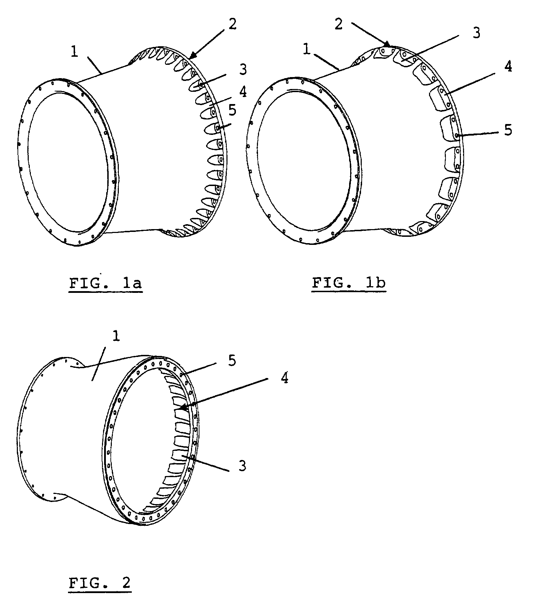

Les figures 1a et 1b représentent une forme d'exécution particulière d'une pièce de structure de révolution (cône par exemple) à assembler, selon l'état de la technique.

La pièce conique 1 à assembler est munie sur sa circonférence d'une bride extérieure 2 pourvue d'ouvertures circulaires 5 destinées au boulonnage sur une deuxième pièce à assembler. Ces ouvertures sont disposées à intervalle régulier dans des évidements 3 usinés dans la masse du cône. L'usinage est réalisé de telle sorte qu'on laisse de la matière, les renforts 4, entre les évidements 3.

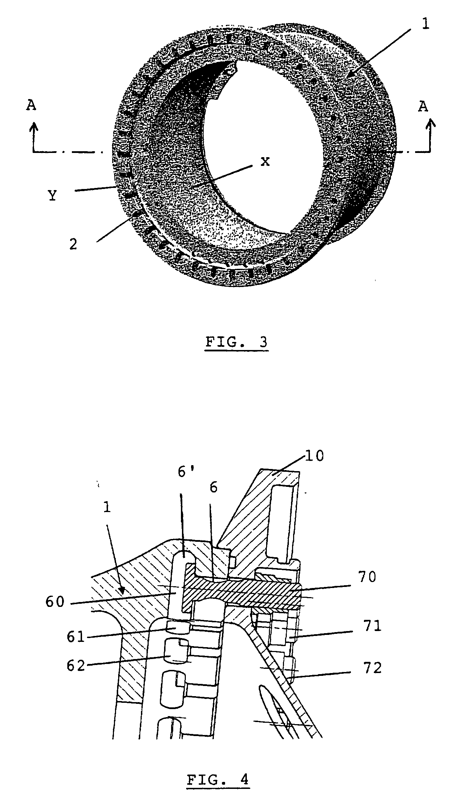

Afin de réduire le facteur de bride, il est également possible d'usiner une bride interne, telle que représentée à la figure 2. Dans ce cas, il est théoriquement possible de disposer des renforts 4 entre les évidements 3, mais en pratique, cette opération est difficile à réaliser.

### Description d'une forme préférée d'exécution de l'invention

La présente invention résout ce problème par la réalisation d'une bride à l'intérieur de la première pièce de structure de révolution à assembler telle que représentée aux figures 3 et 4.

Dans un premier temps, une bride massive 2 est réalisée par tournage à l'intérieur de la première pièce de structure de révolution à assembler 1, qui correspond ici à une pièce conique. Cette bride est ensuite usinée notamment au moyen d'une fraise en T afin de réaliser les orifices correspondant aux logements 60, 61, ... dans lesquels on pourra introduire la tête d'un boulon 70, 71, ... pour l'assemblage de la pièce conique 1 avec la deuxième pièce de structure de révolution 10 comme le montre plus particulièrement la figure 4.

La figure 4 représente une vue en coupe A-A selon un plan passant par l'axe de révolution de la pièce 1, représentée à la figure 3. Une telle section sera appelée ci-après « section longitudinale ». De manière similaire, on désignera par la suite une « section transversale » comme étant l'intersection de la pièce 1 avec un plan perpendiculaire à son axe de révolution.

Chacun des logements 60, 61, ... présentera donc en section longitudinale la forme d'un T. Chaque logement sera constitué d'une première partie 6 essentiellement cylindrique ouverte longitudinalement sur la face intérieure (x) de la pièce de structure de révolution 1 et transversalement sur la face de contact (y) de la bride 2 dans l'assemblage, surmontée d'une deuxième partie 6' essentiellement semi-cylindrique également ouverte longitudinalement sur la face intérieure (x) de ladite pièce de structure 1.

Pour l'assemblage des deux pièces de révolution 1 et 10, la bride 2 est solidarisée à la pièce de révolution 10 avec des boulons à tête en forme de D et éventuellement des rondelles de même forme.

Cette technique de réalisation d'une bride intérieure présente plusieurs avantages :
- la structure de bridage est telle que le facteur de bride est très proche de 1;
- la technique est industriellement viable, en particulier pour de faibles conicités des pièces à assembler;
- l'utilisation de matière est optimalisée, ce qui peut être indispensable avec l'utilisation de l'aluminium, dont la résistance spécifique est faible. En effet, pour un encombrement donné, la quantité de matière disponible est limitée.

## Revendications

1. Pièce de structure de révolution (1) munie à l'une de ses extrémités d'une bride circulaire intérieure (2) destinée à l'assemblage par boulonnage de ladite pièce de structure de révolution (1) avec une seconde pièce de structure de révolution (10), ladite bride comportant des logements (60, 61, 62, ...) destinés à recevoir des éléments de fixation (70, 71, 72, ...) tels que boulons, goujons ou tiges filetées, lesdits logements (60, 61, 62, ...) étant disposés sur la circonférence de ladite bride (2) à intervalles réguliers, **caractérisée en ce que** chaque logement (60, 61, 62, ...) présente, en section longitudinale (A-A) selon un plan passant par l'axe de révolution de la pièce (1), la forme d'un T et est constitué d'une première partie (6) essentiellement cylindrique ouverte longitudinalement sur la face intérieure (x) de la pièce de structure de révolution (1) et transversalement sur la face de contact (y) de la bride (2) dans l'assemblage, surmontée d'une deuxième partie (6') essentiellement semi-cylindrique également ouverte longitudinalement sur la face intérieure (x) de ladite pièce de structure (1), la seconde partie (6') présentant en section transversale essentiellement la forme d'un D, le diamètre de la première partie cylindrique (6) étant inférieur au diamètre de la partie semi-cylindrique (6').

2. Pièce de structure de révolution (1) selon la revendication 1, **caractérisée en ce que** ladite pièce est en aluminium.

3. Procédé de fabrication d'une bride circulaire intérieure (2) disposée sur une pièce de structure de révolution (1), de préférence conique ou cylindrique, et qui présente des logements (60, 61, 62, ...) destinés à recevoir des éléments de fixation (70, 71, 72, ...) tels que boulons, goujons ou tiges filetées, **caractérisé en ce que** lesdits logements (60, 61, 62, ...) sont usinés à intervalles réguliers sur la circonférence de ladite bride (2) à l'aide notamment d'une fraise ayant essentiellement la forme d'un T et de manière telle que l'axe (α) de ladite fraise se déplace, durant l'usinage, dans une direction essentiellement perpendiculaire à l'axe de révolution (β) de ladite pièce (1), tout en restant parallèle audit axe de révolution (γ).

## Claims

1. Rotating structure component (1) provided at one of its ends with an inner circular flange (2) intended for assembling by bolting said rotating structure component (1) with a second rotating structure component (10), said flange comprising housings (60, 61, 62, ...) intended to receive fastening elements (70, 71, 72, ...) such as bolts, pins or screwed rods, said housings (60, 61, 62, ...) being distributed on the circumference of said flange (2) at regular intervals, **characterised in that** each housing (60, 61, 62, ...) presents a T-shape in longitudinal section (A-A) according to a plane passing through the rotation axis of the component (1) and consists of a mainly cylindrical first part (6) which is longitudinally open on the inner side (x) of the rotating structure component (1) and transversely open on the contact side (y) of the flange (2) in the assembly, surmounted by a second part (6') which is mainly semi-cylindrical and also longitudinally open on the inner side (x) of said structure component (1), the second part (6') essentially presenting a D-shape in transverse section, the diameter of the first cylindrical part (6) being smaller than the diameter of the semi-cylindrical part (6').

2. Rotating structure component (1) according to Claim 1, **characterised in that** said component is of made of aluminium.

3. Method for manufacturing an inner circular flange (2) located on a rotating structure component (1), preferably conical or cylindrical and presenting housings (60, 61, 62, ...) intended to receive fastening elements (70, 71, 72, ...) such as bolts, pins or screwed rods, **characterised in that** said housings (60, 61, 62, ...) are machined at regular intervals on the circumference of said flange (2) in particular by means of a milling cutter essentially having a T-shape and such that the axis (α) of said milling cutter moves in a direction that is essentially perpendicular to the rotation axis (β) of said component (1) during the machining while at the same time remaining parallel to said rotation axis (γ).

## Patentansprüche

1. Strukturdrehteil (1), an einem Ende mit einem runden Innenflansch (2) versehen, der zu einer Schraubverbindung dieses Strukturdrehteils (1) mit einem zweiten Strukturdrehteil (10) bestimmt ist; dabei weist der besagte Flansch Aufnahmen (60, 61, 62...) zur Aufnahme der Befestigungselemente (70, 71, 72...) wie Bolzen, Stiftschrauben oder Gewindestifte auf, wobei diese Aufnahmen (60, 61, 62...) in gleichmäßigen Abständen über den Umfang des besagten Flansches (2) angeordnet sind; **dadurch gekennzeichnet, dass** jede Aufnahme (60, 61, 62...) im Längsschnitt (A-A) gemäß einer Ebene, die durch die Drehachse des Teils (1) verläuft, eine T-Form aufweist und aus einem ersten, im wesentlichen zylinderförmigen Teil (6) besteht, der in Längsrichtung auf der Innenseite (x) des Strukturdrehteils (1) und in Querrichtung auf der Kontaktfläche (y) des Flansches (2) in der Verbindung offen ist, und einem darüber befindlichen zweiten, im wesentlichen halbzylinderförmigen Teil (6'), der ebenfalls in Längsrichtung auf der Innenseite (x) des besagten Strukturteils (1) offen ist, wobei der zweite Teil (6') im Querschnitt im wesentlichen die Form eines D's aufweist; der Durchmesser des ersten zylinderförmigen Teils (6) ist dabei kleiner als der Durchmesser des halbzylinderförmigen Teils (6').

2. Strukturdrehteil (1) gemäß Anspruch 1, **dadurch gekennzeichnet, dass** dieses Teil aus Aluminium besteht.

3. Herstellungsverfahren eines runden Innenflansches (2) auf einem vorzugsweise kegel- oder zylinderförmigen Strukturdrehteil (1), der Aufnahmen (60, 61, 62...) für die Aufnahme von Befestigungselementen (70, 71, 72...) wie Bolzen, Stiftschrauben oder Gewindestiften aufweist, **dadurch gekennzeichnet, dass** diese Aufnahmen (60, 61, 62...) in gleichmäßigen Abständen auf dem Umfang dieses Flansches (2) hergestellt werden, vor allem mittels einer Fräse, die im wesentlichen eine T-Form aufweist, und zwar dergestalt, dass die Achse (α) dieser Fräse sich während der Bearbeitung in einer im wesentlichen senkrecht zur Drehachse (β) des besagten Teils (1) stehenden Richtung bewegt, wobei sie parallel zur besagten Drehachse (γ) bleibt.
